# EUROPEAN PATENT APPLICATION

(11) **EP 2 966 577 A1**
(43) Date of publication of application: **13.01.2016**
(21) Application number: 13876810.6
(22) Date of filing: 01.08.2013
(51) Int. Cl.: G06F 17/24

(54) **ELECTRONIC READING DEVICE AND METHOD FOR EXTRACTING AND SAVING TEXT INFORMATION THEREOF, AND STORAGE MEDIUM**

(30) Priority: 06.03.2013 CN 201310070537
(71) Applicant: Huizhou TCL Mobile Communication Co., Ltd., Huizhou, Guangdong 516006 (CN)
(72) Inventor: ZHOU, Xianyang, HuiZhou Guangdong 516006 (CN)
(74) Representative: Petraz, Gilberto Luigi
(86) International application number: PCT/CN2013/080662
(87) International publication number: WO 2014/134899

(57) **Abstract**

Provided is a method for extracting and saving text information of an electronic reading device. The method comprises: after an electronic document of an electronic reading device is opened, detecting whether a text is selected or not; if yes, a user interface popping up a menu button for prompting a user to save the selected text; after it is detected that the menu button is selected, extracting the selected text, and saving same in the memory of the electronic reading device in the form of character strings; and according to a file save path, writing the character strings in the memory in corresponding folders.

## Description

### Field of the Invention

The present invention relates to a technical field of extracting and saving text information in a mobile communication device, and more particularly to an electronic reading device and method for extracting and saving text information and storage medium thereof.

### Background of the Invention

An electronic reading device is a novel digital reader with a display screen including a liquid crystal display (LCD) or an electronic paper. The electronic reading device is capable of reading significant majority of electronic book's formats, e.g. PDF (Portable Document Format) style, CHM (Complied Help Manual) style which is a new generation document style provided by Microsoft company, and TXT style which is a document style used in operating system provided by Microsoft company, greatly facilitating the text reading and document editing for the user.

Currently, part of mobile communication devices, e.g. smartphone or tablet computer, also provide the functions of the electronic reading or editing features. These mobile communication devices are easily portable and large storage facility for providing a great benefit to the user in life, work and learning course.

When the user employs the above-mentioned mobile communication device to read a variety of electronic books or text information, there is a need to extract some important or interested text paragraph from the text information and to store the uniformly extracted text paragraph in a predetermined document.

While utilizing conventional electronic reading device to implement the above operations, the user first selects desired text and clicks the functions "copy" and "paste" in the menu list in order to store the selected text. However, since the electronic reading device is limited to the screen size and thus, only one application program is operated on the current screen, the user must withdraw from the operation interface of the electronic reading device and open another document or create a new document during the document management response procedure when the user desires to paste the selected text to another document. The copied text is pasted in the open or created document by executing the function "paste" in the menu list and finally, the document with the copied text is stored by clicking the function "store" in the menu list.

Based on the aforementioned operation procedures, the user needs to change different interfaces of the application programs, which is a complicated implement procedure. Further, when the user selects different text paragraphs, the user does not stop switching operation interfaces, which downgrades the user experiences.

### Summary of the Invention

In vie of the aforementioned problems, the present invention provides an electronic reading device and method for extracting and saving text information to solve the problems of the complicated implement procedure, different interface change and the downgraded user experience when saving the text information in the prior art.

To solve the aforementioned problems, the present invention adopts the following technical scheme.

A method for extracting and saving a text information in an electronic reading device, the method comprising the steps of:
displaying an electronic document by way of the electronic reading device wherein the electronic document comprises the text information;
detecting the electronic document to determine whether the text information is selected;
displaying a menu button on a user interface by way of the electronic reading device for prompting a user to store the selected text information if the text information in the electronic document is selected;
deciding whether the menu button receives a checking operation during a predetermined time;
extracting the selected text information and converting the selected text information into a text string for saving the text string in a memory unit of the electronic reading device if the menu button receives the checking operation during the predetermined time; and
writing the text string in the memory unit of the electronic reading device to a default folder based on a document saving path wherein the default folder is corresponding to the document saving path and is formed by the electronic reading device.

The present invention provides an electronic reading device and method for extracting and saving text information to solve the problems of the complicated implement procedure, different interface change and the downgraded user experience when saving the text information in the prior art.

To solve the aforementioned problems, the present invention adopts the following technical scheme.

A method for extracting and saving a text information in an electronic reading device, the method comprising the steps of:
displaying an electronic document by way of the electronic reading device wherein the electronic document comprises the text information;
detecting the electronic document to determine whether the text information is selected;
displaying a pop-up menu button on a user interface by way of the electronic reading device for prompting a user to store the selected text information if the text information in the electronic document is selected;
extracting the selected text information and converting the selected text information into a text string for saving the text string in a memory unit of the electronic reading device if the pop-up menu button receives a checking operation; and
writing the text string in the memory unit of the electronic reading device to a default folder based on a document saving path wherein the default folder is corresponding to the document saving path.

The present invention provides an electronic reading device and method for extracting and saving text information to solve the problems of the complicated implement procedure, different interface change and the downgraded user experience when saving the text information in the prior art.

To solve the aforementioned problems, the present invention adopts the following technical scheme.

An electronic reading device, comprising:
a user interface, for displaying an electronic document wherein the electronic document comprises the text information;
a control module, for displaying a pop-up menu button to prompt a user in order to store the selected text information if the text information in the electronic document is selected;
a text extracting module, for converting the selected text information into a text string for saving the text string in the memory unit of the electronic reading device if the pop-up menu button receives a checking operation; and
a document operation module, for writing the text string in the memory unit of the electronic reading device to a default folder based on a document saving path wherein the default folder is corresponding to the document saving path.

The present invention provides an electronic reading device and method for extracting and saving text information to solve the problems of the complicated implement procedure, different interface change and the downgraded user experience when saving the text information in the prior art.

To solve the aforementioned problems, the present invention adopts the following technical scheme.

A storage medium for saving a processor executable instruction, wherein the processor executable instruction implements the procedures comprising:
displaying an electronic document by way of the electronic reading device wherein the electronic document comprises the text information;
detecting the electronic document to determine whether the text information is selected;
displaying a pop-up menu button on a user interface by way of the electronic reading device for prompting a user to store the selected text information if the text information in the electronic document is selected;
extracting the selected text information and converting the selected text information into a text string for saving the text string in a memory unit of the electronic reading device if the pop-up menu button receives a checking operation; and
writing the text string in the memory unit of the electronic reading device to a default folder based on a document saving path wherein the default folder is corresponding to the document saving path.

In comparison with the conventional technique, the present invention provides an electronic reading device and method for extracting and saving text information for displaying a pop-up button menu to prompt a user to store the selected text information if the text information in the electronic document is selected. The selected text information is extracted if the pop-up menu button receives a checking operation. The text string is written to a default folder of the electronic reading device, which simplifies the operation of saving the text information and facilitates the user experience.

### Brief Description of the Drawings

FIG. 1 is a schematic flow chart of a method for extracting and saving text information in an electronic reading device according to one embodiment of the present invention; and
FIG. 2 is a schematic structural block diagram of an electronic reading device according to one embodiment of the present invention.

### Detailed Description of the Preferred Embodiments

In the drawings, the same reference symbol represents the same or a similar component. The theorem of the present invention is illustrated by a computing environment. The foregoing aspects and many of the attendant advantages of this invention will become more readily appreciated as the same becomes better understood by reference to the following detailed description but rather than limiting of the present invention.

In the following descriptions, the embodiments are explained by the steps and symbols which are implemented in one or more computing devices. Thus, these steps and operations utilizes the computing executions several times wherein the computing executions represent that a computing processor employs a structural type of electronic data signal for operations. The operations convert the data or maintain the data in the memory unit of the computing processor. The person skilled in the art can re-allocate or change the implement of the computing devices. The data structure for sustaining the data is the physical address of the memory unit which is characterized by the data format definition. A person skilled in the art should note that the following steps and operations can be performed by hardware components.

The theorem of the present invention utilizes many general purposes of computation, communication conditions or configurations wherein the well-known computing system, communication conditions or configurations includes, but not limited to, hand-held phone, personal computer, server, multi-processor, micro-computer, main architecture computer and distribution operation environment system.

In the present invention, the term of module is a software component performed on the operation system. The assembly, module and engine and service are regarded as an implement target in the operation system. Preferably, the apparatus and method is implemented by software program and/or hardware program.

The present invention provides an electronic reading device and method for extracting and saving text information and storage medium thereof. When the user read an electronic document by way of electronic reading device, the user selects a desired paragraph of text information (text or picture) which is extracted and stored in a new folder or a default folder, or in a predetermined constructed folder. Thus, there is no need to perform "copy" and "paste" operation. However, while saving the selected text information, a document saving path, e.g. path "sdcard:\Book\summary.txt", is configured in advance for converting the selected text. If the user does not set the saving path, the electronic reading device prompts the user to select one folder while the user desires to store the selected text information. For example, the text information is locally stored in an available folder. Further, if the folder is unavailable, the electronic reading device automatically constructs a new folder for saving the text information. Alternatively, the text information is stored in the default folder.

The electronic reading device of the present invention is selected one group consisting of desktop computer, notebook computer, workstation, handheld computer, ultra mobile personal computer, tablet computer, personal digital assistant (PDA), web pad and mobile phone, which are configured by a memory unit and a computing device terminal having a micro-processor with processing capability.

The following embodiments refer to the accompanying drawings for exemplifying specific implementable embodiments of the present invention. The foregoing aspects and many of the attendant advantages of this invention will become more readily appreciated as the same becomes better understood by reference to the following detailed description but rather than limiting of the present invention.

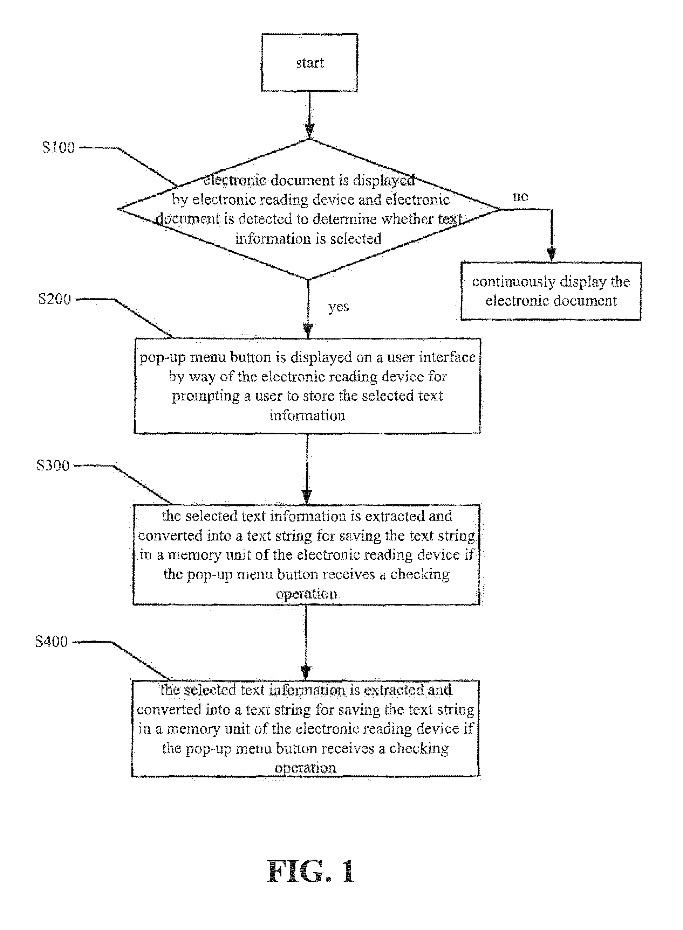

Referring to FIG. 1, it is a schematic flow chart of a method for extracting and saving text information in an electronic reading device according to one embodiment of the present invention. In FIG. 1, the method for realizing downloading of mobile terminal application includes the following steps.

In step S100, an electronic document is displayed by way of the electronic reading device and the electronic document is detected to determine whether the text information is selected. If yes, proceed to step S200 and if no, continuously display the electronic document.

In one embodiment, the electronic reading device displays the electronic document by way of a user interface. For example, the electronic reading device provides an interface function or method for selecting the text information on the user interface. In one case of Android platform, the function "Selection.setSelection(text' start' stop)" is provided and the electronic reading device determines whether the text information is correctly selected according to a return value, wherein the text massage includes text, pictures and/or website address, but not listed all here.

In step S200, a pop-up menu button is displayed on a user interface by way of the electronic reading device for prompting a user to store the selected text information.

In one embodiment of the step S100, the return value of interface function of the document selection indicates that the text information is selected successfully, the electronic reading device generates a pop-up menu button to help user's operation.

In step S300, the selected text information is extracted and converted into a text string for saving the text string in a memory unit of the electronic reading device if the pop-up menu button receives a checking operation.

As mentioned above, the text information is selected by the interface function provided by the electronic reading device. After the selected text information is extracted, the selected text information is converted into text string to be stored in the memory unit of the electronic reading device. Thus, the content of text string is acquired by reading the string content stored in the memory unit to complete the extraction of the text information.

In step S400, the selected text information is extracted and converted into a text string for saving the text string in a memory unit of the electronic reading device if the pop-up menu button receives a checking operation.

In one embodiment, the electronic reading device provides an interface function for performing document writing procedure wherein the interface function includes a starting address (pointer) of saving the text string in the memory unit and a document saving path. Thus, the text string in the memory unit can be written to the default folder by way of interface function.

In one case, the menu button is a virtual button shown on the user interface of the electronic reading device. The menu button display in a predetermined time, e.g. five seconds, and the menu button is hidden if the menu button does not receive the checking operation during the predetermined time. For example, the user is able to set the predetermined time. While the menu button is displayed, the prompt "do you want to store text" is displayed. The selected text information is extracted and stored if the menu button receives the checking operation, e.g. click operation, during the predetermined time. The user constructs a default folder in the electronic reading device in advance for saving the text information in the default folder. In another case, the selected text information is stored in the existing folder of the electronic reading device.

If the user stores the selected text information in the constructed folder, the step S500 further comprises the steps of: the user constructs the default folder in the electronic reading device; and the electronic reading device writes the text string to the default folder based on the document saving path corresponding to the default folder.

After the user constructs a default folder in the electronic reading device, the user performs the writing procedure of the text information. In the present invention, the electronic reading device may be smartphone, tablet computer which provide related document operation interface functions. MTK company provides a platform with document construction function "FS_Open", document writing interface function "FS_Write", and Android and Symbian platforms also provide the related interface functions.

When the user constructs a default folder, the interface of the electronic reading device constructs default folder, and the user is capable of configuring the document saving path of the constructed default folder or the manufacturer of the electronic reading device configures a saving path. Then, the text string in the memory unit of the electronic reading device is written to the default folder by way of the document writing interface function. In one case, the memory address (pointer) of saving the text information and the document saving path of the default folder of writing the content is defined as two parameters of the document writing interface function.

If the electronic reading device includes a default folder for saving the selected text information, the step S500 further comprises the steps of: deciding whether an original document exists in the default folder; writing the text string to the default folder of the original document if the original document does not exist in the default folder; and writing the text string to an end portion of the original document if the original document exists in the default folder.

The electronic reading device decides whether an original document exists in the default folder by way of the document operation interface functions. In one embodiment, when the document construction function "FS_Open" provided by MTK company, the function transmits a return value to decide whether an original document exists in the default folder if a document is opened successfully.

When the selected text information is stored in the existing default folder, the text string stored in the memory unit of the electronic reading device is written to the default folder by way of a document writing interface function. Before the text string is written to the default folder, the electronic reading device decides whether an original document exists in the default folder. The text string is written to an end portion of the original document if the original document exists in the default folder. Similarly, the memory address (pointer) of saving the text string and the document saving path of the default folder of writing the content is defined as two parameters of the document writing interface function.

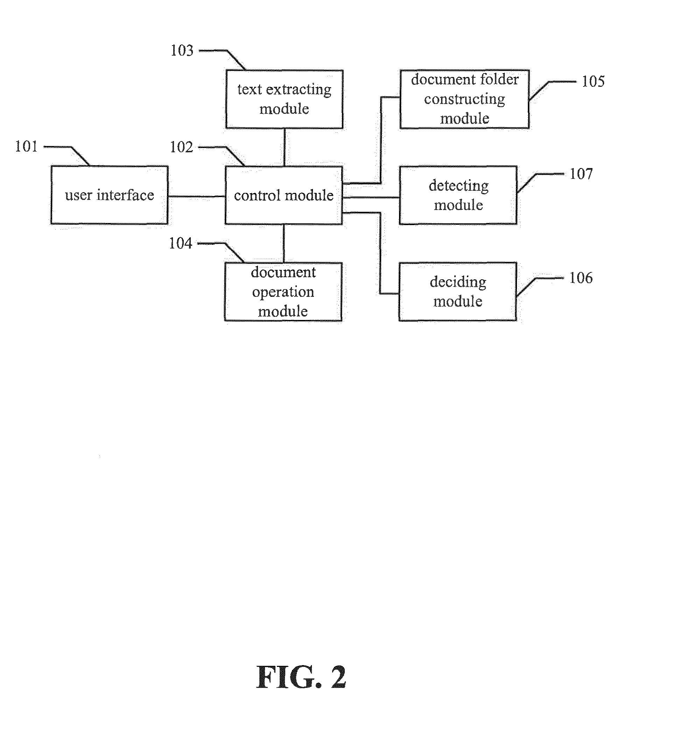

Based on the aforementioned electronic reading device and method for extracting and saving text information, the present invention provides an electronic reading device including a mobile phone with touch screen and a tablet computer. As shown in FIG. 2, the electronic reading device includes a user interface 101, a control module 102, a text extracting module 103, and a document operation module 104.

The user interface displays an electronic document wherein the electronic document comprises the text information having text and pictures. The control module 102 displays a pop-up menu button to prompt a user in order to store the selected text information if the text information in the electronic document is selected. The text extracting module 103 converts the selected text information into a text string for saving the text string in the memory unit of the electronic reading device if the pop-up menu button receives a checking operation. The document operation module 104 writes the text string in the memory unit of the electronic reading device to a default folder based on a document saving path wherein the default folder is corresponding to the document saving path.

In one embodiment, the electronic reading device further comprises a document folder constructing module 105 for constructing the default folder in the electronic reading device. Thus, the selected text information is stored in the default folder constructed by the electronic reading device based on the user's requirement.

In one embodiment, the electronic reading device further comprises a deciding module 106 decides whether an original document exists in the default folder wherein the default folder includes a constructed default folder and existing default folder. The control module 102 controls the document operation module 104 for writing the text string to an end portion of the original document if the deciding module 106 decides that the original document exists in the default folder.

In one embodiment, the electronic reading device further comprises a detecting module 107 detects whether the pop-up menu button receives a checking operation during a predetermined time. The control module 102 controls the text extracting module 103 for extracting the selected text information and for converting the selected text information into a text string for saving the text string in the memory unit of the electronic reading device if the detecting module detects that the pop-up menu button receives the checking operation during the predetermined time. The control module 102 controls the document operation module 104 for hiding the pop-up menu button if the detecting module detects that the pop-up menu button does not receive the checking operation during the predetermined time.

The present invention provides an electronic reading device and method for extracting and saving text information for displaying a pop-up button menu to prompt a user to store the selected text information if the text information in the electronic document is selected. The selected text information is extracted if the pop-up menu button receives a checking operation. The text string is written to a default folder of the electronic reading device, which simplifies the operation of saving the text information and facilitates the user experience.

In one embodiment, the electronic reading device comprises computing device, tablet computer and mobile phone with touch screen. It is intended that the electronic reading device and a method for extracting and saving text information in the electronic reading device cover similar arrangements be included within the spirit. Thus, the electronic reading device is capable of implementing the method for extracting and saving text information according to the above-mentioned embodiments of an electronic reading device and method for extracting and saving text information, which will not repeated here.

With respect to the electronic reading device and method for extracting and saving text information, person skilled in the art can recognize that all or apart of the steps in the electronic reading device and method for extracting and saving text information are implemented by hardware component with computing procedures wherein the computing procedures is stored in the computer readable storage medium. For example, the computing procedures is stored in the memory of terminal device and executed by a processor in the terminal device. The execution process includes the flow chart of the electronic reading device and method for extracting and saving text information wherein the memory may be disk drive, optical disk, read-only memory (ROM) and/or random access memory.

The function modules of the electronic reading device can be integrated into a processing chip or formed by individual modules, or two or more modules are assembled together. The assembled modules may be hardware or software function blocks. If the assembled modules are implemented by software components for sale and use independently, they are stored in the computer readable storage medium including ROM, disk drive and/or optical disk.

According to the aforementioned descriptions, the present invention solves the problem of which the user faces the considerable amount of application programs in the internet network. It is hard to distinguish the authenticity of the application program when the user selects the application program.

As is understood by a person skilled in the art, the foregoing preferred embodiments of the present invention are illustrative rather than limiting of the present invention. It is intended that they cover various modifications and similar arrangements be included within the spirit and scope of the appended claims, the scope of which should be accorded the broadest interpretation so as to encompass all such modifications and similar structure.

## Claims

1. A method for extracting and saving a text information in an electronic reading device, the method comprising the steps of:
displaying an electronic document by way of the electronic reading device wherein the electronic document comprises the text information;
detecting the electronic document to determine whether the text information is selected;
displaying a menu button on a user interface by way of the electronic reading device for prompting a user to store the selected text information if the text information in the electronic document is selected;
deciding whether the menu button receives a checking operation during a predetermined time;
extracting the selected text information and converting the selected text information into a text string for saving the text string in a memory unit of the electronic reading device if the menu button receives the checking operation during the predetermined time; and
writing the text string in the memory unit of the electronic reading device to a default folder based on a document saving path wherein the default folder is corresponding to the document saving path and is formed by the electronic reading device.

2. The method for extracting and saving the text information in the electronic reading device of claim 1, further comprising the steps of:
constructing the default folder in advance; and
writing the text string to the default folder based on the document saving path.

3. The method for extracting and saving the text information in the electronic reading device of claim 1, further comprising the steps of:
deciding whether an original document exists in the default folder when the text string in the memory unit of the electronic reading device is written to the default folder based on the document saving path;
writing the text string to an end portion of the original document if the original document exists in the default folder; and
writing the text string to the default folder of the original document if the original document does not exist in the default folder.

4. The method for extracting and saving the text information in the electronic reading device of claim 1, further comprising a step of: hiding the menu button if the menu button does not receive the checking operation during the predetermined time when the menu button is decided whether to receive a checking operation during a predetermined time.

5. A method for extracting and saving a text information in an electronic reading device, the method comprising the steps of:
displaying an electronic document by way of the electronic reading device wherein the electronic document comprises the text information;
detecting the electronic document to determine whether the text information is selected;
displaying a pop-up menu button on a user interface by way of the electronic reading device for prompting a user to store the selected text information if the text information in the electronic document is selected;
extracting the selected text information and converting the selected text information into a text string for saving the text string in a memory unit of the electronic reading device if the pop-up menu button receives a checking operation; and
writing the text string in the memory unit of the electronic reading device to a default folder based on a document saving path wherein the default folder is corresponding to the document saving path.

6. The method for extracting and saving the text information in the electronic reading device of claim 5, during the step of writing the text string in the memory unit of the electronic reading device to a default folder based on a document saving path, further comprising the steps of:
constructing the default folder in the electronic reading device; and
writing the text string to the default folder based on the document saving path.

7. The method for extracting and saving the text information in the electronic reading device of claim 5, during the step of writing the text string in the memory unit of the electronic reading device to a default folder based on a document saving path, further comprising the steps of:
deciding whether an original document exists in the default folder;
writing the text string to an end portion of the original document if the original document exists in the default folder; and
writing the text string to the default folder of the original document if the original document does not exist in the default folder.

8. The method for extracting and saving the text information in the electronic reading device of claim 5, further comprising the steps of:
detecting whether the pop-up menu button receives a checking operation during a predetermined time after the step of displaying the pop-up menu button on the user interface by way of the electronic reading device;
extracting the selected text information and converting the selected text information into a text string for saving the text string in the memory unit of the electronic reading device if the checking operation is received during the predetermined time; and
hiding the pop-up menu button if the menu button does not receive the checking operation.

9. An electronic reading device, comprising:
a user interface, for displaying an electronic document wherein the electronic document comprises the text information;
a control module, for displaying a pop-up menu button to prompt a user in order to store the selected text information if the text information in the electronic document is selected;
a text extracting module, for converting the selected text information into a text string for saving the text string in the memory unit of the electronic reading device if the pop-up menu button receives a checking operation; and
a document operation module, for writing the text string in the memory unit of the electronic reading device to a default folder based on a document saving path wherein the default folder is corresponding to the document saving path.

10. The electronic reading device of claim 9, further comprising a document folder constructing module, for constructing the default folder in the electronic reading device.

11. The electronic reading device of claim 9, further comprising:
a deciding module, for deciding whether an original document exists in the default folder;
wherein the control module controls the document operation module for writing the text string to an end portion of the original document if the deciding module decides that the original document exists in the default folder; and
wherein the control module controls the document operation module for writing the text string to the default folder of the original document if the deciding module detects that the original document does not exist in the default folder.

12. The electronic reading device of claim 9, further comprising:
a detecting module, for detecting whether the pop-up menu button receives a checking operation during a predetermined time;
wherein the control module controls the text extracting module for extracting the selected text information and for converting the selected text information into a text string for saving the text string in the memory unit of the electronic reading device if the detecting module detects that the pop-up menu button receives the checking operation during the predetermined time; and
wherein the control module controls the document operation module for hiding the pop-up menu button if the detecting module detects that the pop-up menu button does not receive the checking operation during the predetermined time.

13. The electronic reading device of claim 9, wherein the electronic reading device comprises a mobile phone with a touch screen.

14. The electronic reading device of claim 9, wherein the electronic reading device comprises a tablet computer.

15. A storage medium for saving a processor executable instruction, wherein the processor executable instruction implements the procedures comprising:
displaying an electronic document by way of the electronic reading device wherein the electronic document comprises the text information;
detecting the electronic document to determine whether the text information is selected;
displaying a pop-up menu button on a user interface by way of the electronic reading device for prompting a user to store the selected text information if the text information in the electronic document is selected;
extracting the selected text information and converting the selected text information into a text string for saving the text string in a memory unit of the electronic reading device if the pop-up menu button receives a checking operation; and
writing the text string in the memory unit of the electronic reading device to a default folder based on a document saving path wherein the default folder is corresponding to the document saving path.

16. The storage medium of claim 15, wherein the processor executable instruction implements the procedures comprising:
constructing the default folder in the electronic reading device; and
writing the text string to the default folder based on the document saving path.

17. The storage medium of claim 15, wherein the processor executable instruction implements the procedures comprising:
deciding whether an original document exists in the default folder;
writing the text string to an end portion of the original document if the original document exists in the default folder; and
writing the text string to the default folder of the original document if the original document does not exist in the default folder.

18. The storage medium of claim 15, wherein the processor executable instruction implements the procedures comprising:
detecting whether the pop-up menu button receives a checking operation during a predetermined time;
extracting the selected text information and converting the selected text information into a text string for saving the text string in the memory unit of the electronic reading device if the checking operation is received during the predetermined time; and
hiding the pop-up menu button if the menu button does not receive the checking operation.
